# EUROPEAN PATENT APPLICATION

(11) **EP 1 253 517 A1**
(43) Date of publication of application: **30.10.2002**
(21) Application number: 01610045.5
(22) Date of filing: 26.04.2001
(51) Int. Cl.: G06F 9/54

(54) **Stateless server**

(71) Applicant: TELEFONAKTIEBOLAGET LM ERICSSON, 126 25 Stockholm (SE)
(72) Inventor: Elg, Johannes, 217 63 Malmö (SE)
(74) Representative: Boesen, Johnny Peder

(57) **Abstract**

This invention relates to a method of providing a stateless server, the method comprising the steps of receiving a request from a client at the server, obtaining a result by executing the request at the server, wherein that the method further comprises the steps of receiving a continuation state from the client, determining a first part of the result, where the first part has not been sent to the client before, on the basis on the continuation state, sending at least a part of the first part of the result from the server to the client, and deleting/removing the state, the result and any information relevant to the client from the server.

The invention also relates to a system comprising a stateless server, a computer-readable medium, and a computer system.

## Description

The present invention relates to a method of providing a stateless server, the method comprising the steps of
- receiving a request from a client at the server,
- obtaining a result by executing the request at the server.

The present invention also relates to a system comprising a stateless server where the server comprises
- storage means comprising information,
- communication means for communicating with a client, and
- processing means.

Additionally, the invention relates to a computer system for performing the method according to the invention and a computer readable-medium comprising a program, which may cause one or more computers to perform the method of the present invention.

It should be emphasised that the term "comprises/comprising" when used in this specification is taken to specify the presence of stated features, integers, steps or components but does not preclude the presence or addition of one or more other features, integers, steps components or groups thereof.

During transaction in normal client/server systems, where at least one client connects to a server and requests some kind of information and/or data, the server normally needs to store some information locally about the ongoing process especially if the request from the client requires multiple responses e.g. because of a limited 'max transaction unit' (MTU), i.e. the information to be sent to the client is larger than a single transmission unit, data packet, etc.

The information that the server has to store locally while the transaction is ongoing is e.g. who the client is, where the client is located (e.g. IP-address), how much of the information is already sent, either the remaining or complete information requested by the client, etc. This information is often referred to as a state being stored in the server. The state is used to resume the transaction when the client has received part of the complete response and re-establishes the communication connection.

A server will have a state for each client being part of an ongoing information/data exchange where multiple responses are needed for one reason or another.

However, each state uses memory at the server, which may be a problem or at least undesirably especially if a large number of clients are connected to the server, which is usually the case.

Additionally, there is also the risk of mismatch between the state in a client and the server thereby making the transaction process less robust and prone to loss of information.

Additionally, if the client aborts the ongoing transmission, breaks down, goes out of communication range (for wireless communication applications), goes off-line, etc. there is a risk that the state is kept unnecessary at the server at least until a time-out occurs thereby reducing the available memory, which otherwise could have been used for other clients.

The object of the invention is to provide a method for obtaining a stateless server or a stateless functionality in a server, master device, computer, etc. thereby avoiding the above-mentioned problems.

Another object of the present inventions is to provide a method for obtaining a stateless server in an easy, simple and transparent manner.

A further object is to obtain a stateless server using a state (stored/located elsewhere than the server when it is not used), which needs very little memory.

These objects and others are achieved by a method of the aforementioned kind where the method further comprises the steps of
- receiving a continuation state from the client,
- determining a first part of the result, where the first part has not been sent to the client before, on the basis on the continuation state,
- sending at least a part of the first part of the result from the server to the client, and
- removing from the server the continuation state, the result and any information relevant to the client.

In this way, no state regarding the ongoing transactions needs to be kept at the server after use since the state simply is received from the client, used and removed/deleted.

Additionally, the abovementioned advantages of a stateless server is obtained including:
- reduced memory usage, since the state only uses memory at the server when the process is taking place,
- no risk of mismatch between the state in a client and the server thereby making the transaction process more robust and less prone to loss of information,
- no risk of keeping the state unnecessarily at the server, thereby reducing the available memory that otherwise could have been used for other clients, e.g. because the client aborts the ongoing transmission, breaks down, goes out of communication range (for wireless communication applications), goes off-line, etc.

In accordance with one embodiment of the method, the step of determining the first part comprises
- determining a second part of the result, where the second part has already been sent to the client, on the basis of the continuation state, and
- skipping the second part of the result resulting in the first part of the result.

Hereby, the part of the result that has not been sent is determined by determining and removing the part of the result that has been transmitted, i.e. the continuation state indirectly specifies the part to be sent.

In accordance with an alternative embodiment of the method, the continuation state comprises a field indicating the start of the first part and in that the step of determining the first part comprises
- using the field of the continuation state thereby directly determining the first part of the result.

Hereby, the part of the result that has not been transmitted yet may be determined directly on the basis of the continuation state, e.g. from a field, value, etc. located/stored in the state.

In accordance with a preferred embodiment, the method further comprises the step of updating the continuation state in order to indicate, which part of the result that has been sent to the client, if only a part of the first part is sent to the client.

Hereby, the continuation state is updated to reflect how far the ongoing transmission process is in a very easy and simple way if the process has to continue, i.e. the client has not received the complete result (only a part of the first part is sent to the client).

The update may e.g. be done at the server (where the updated continuation state is transmitted to the client preferably together with the sent part of the first part) or at the client (where preferably the total size or amount/number of elements in the result is transmitted to the client in order to make the update there possible).

In accordance with another embodiment, the updated continuation state is sent to together with the least a part of the partial result from the server to the client. Hereby, the client receives the updated continuation state with the result for later request.

In a preferred embodiment, the continuation state is received together with or as part of the request from the client.

BLUETOOTH is a trademark owned by Bluetooth SIG Inc. (Bluetooth Special Interest Group Incorporated). A Bluetooth communication link is a local wireless radio link supported by the Bluetooth wireless technology.

In another preferred embodiment, the parameter "continuation state" according to the Bluetooth Service Discovery Protocol (SDP) is used as the continuation state according to the present invention.

If the updating of the continuation state is done in the (e.g. SDP) server, no modification is required to the (e.g. SDP) clients, in order for the server to take full advantage of the invention.

Hereby, a state of very limited size is obtained. Additionally, the invention may be used in a Bluetooth environment with no special modifications on the specific devices involved unless they want to take full advantage of the invention, i.e. they have to know the format and working of the specific implementation of the continuation state.

In a preferred embodiment, the continuation state further comprises a pointer, an index, or offset to the first part.

In this way, the next part of the result that is to be sent to the client may be retrieved and/or identified in a very easy and efficient way, since the pointer, offset, index, etc. locates the relevant information/data of the result directly thereby avoiding the need for searching the result.

In another preferred embodiment, the continuation state further comprises a value representing the size of the result.

In this way, the value may be used to determine whether a query result has changed during the first and subsequent request. In that case, the process is preferably started over.

In a preferred embodiment, the method is used in connection with a mobile telephone being the server.

In one embodiment the server and the client are connected to each other via a wireless medium.

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of media that provides a computer system with information regarding how instructions/commands should be executed.

Hereby, when a computer is caused to retrieve electronic information - as a consequence of the contents of a computer-readable medium as described above - the advantages mentioned in connection with the corresponding method according to the invention are achieved.

Additionally, the invention relates to a computer system comprising means adapted to execute a program, where the program, when executed, causes the computer system to perform the method according to the invention thereby obtaining the above mentioned advantages and/or effects.

By computer system is meant e.g. a system comprising one or more processor means, like a specialised or general purpose CPU or the like, which may be programmed/instructed at one time or another in such a way that the computer executes the method according to the invention fully or in part.

Finally, the invention also relates to a system comprising a stateless server of the aforementioned kind where
- the communication means are adapted to receive a request and a continuation state from the client,
- the processing means are adapted to obtain a result by executing the request at the server and to determine a first part of the result, where the first part has not been sent to the client before, on the basis on the continuation state,
- the communication means are further adapted to send at least a part of the first part of the result from the server to the client, and where
- the processing means are further adapted to remove from the server the continuation state, the result and any information relevant to the client.

In one embodiment, the determination of the first part comprises
- determining a second part of the result, where the second part has already been sent to the client, on the basis of the continuation state, and
- skipping the second part of the result resulting in the first part of the result.

In one embodiment, the continuation state comprises a field indicating the start of the first part and in that determination of the first part comprises
- using the field of the continuation state thereby directly determining the first part of the result.

In one embodiment, the processing means further are adapted to update the continuation state in order to indicate, which part to the result that has been sent to the client, if only a part of the first part is sent to the client.

In one embodiment, the updated continuation state is sent via the communication means to together with the least a part of the partial result from the server to the client.

In one embodiment, the continuation state is received together with the request.

In one embodiment, the parameter "continuation state" according to the Bluetooth Service Discovery Protocol (SDP) is used as the continuation state.

In one embodiment, the server and the client are connected to each other via a wireless medium.

In one embodiment, the continuation state further comprises a pointer, an index, or offset to the first part.

In one embodiment, the continuation state further comprises a value representing the size of the result.

The system and embodiments thereof correspond to the method and embodiments thereof and have the same advantages for the same reasons why they are not described again.

The present invention will now be described more fully with reference to the drawings, in which
Figure 1 shows a schematic block diagram of an generalised embodiment of the system according to the present invention;
Figure 2a illustrates an example of a continuation state according to the present invention;
Figure 2b illustrates another example of a continuation state according to the present invention;
Figure 3 shows a flow chart illustrating an embodiment of the method according to the present invention;
Figure 4 illustrates the relationship of a result of a request/query and the continuation state according to the present invention;
Figure 5 shows an embodiment of a stateless server, which may be a part of the system and/or use the method according to the present invention.

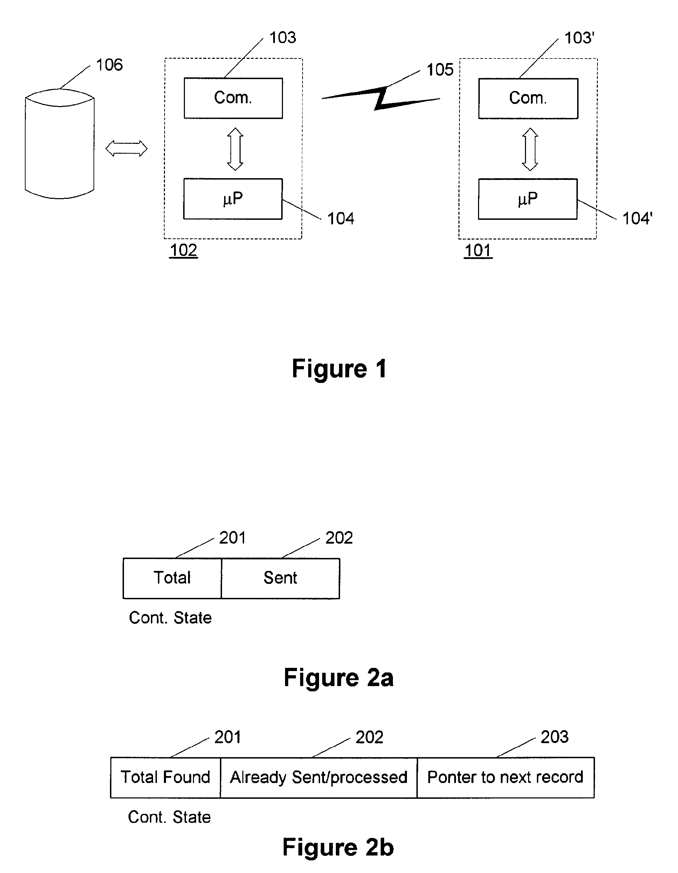

Figure 1 shows a schematic block diagram of an generalised embodiment of the system according to the present invention. Shown is a client (101), which communicates with a server (102) via a communication link (105). Several clients may be communicating/connected to a single server (102).

The communication link may be a physical communication link like a network/Internet connection, a wireless communication/radio link, e.g. a Bluetooth communication link, infrared communication link, e.g. IrDa, a cable or in general any other communication link.
The client (101) and the server (102) may be connected to each other in a wireless local area network (W-LAN), a wireless personal area network (PAN), etc.

The client (101) comprises communication means (103') and one or more processing units (104'). Additionally, the client (101) also comprises memory means (not shown) and/or storage means (not shown) for holding and/or keeping information/data to be processed by the processing unit (104').

The server (102) also comprises communication means (103) and one or more processing means/units (104). Additionally, the server (102) also comprises memory means (not shown) and storage means (106) for holding and/or keeping information/data to be processed by the processing unit (104). More specifically, the storage means (106) may comprise one or more databases comprising information e.g. in the form of a number of records.

When the server (102) receives a request/query from the client (101) via the communication link (105) and the communication means (103, 103') the request is processed by the processing means (103) and a query is executed in the database(s) in the storage means (106) thereby deriving a result of the query. Also received from the client (101) is a continuation state, which may indicate that the request has been performed before and how much of the result has already been transmitted to the client (101).

After the result is derived by the server (102) the processing means/unit(s) (104) determines and/or locates the part of the result that has not been sent to the client (101) already. The entire part of the result, which has not been sent before, is sent in one go to the client (101) if it is possible. After the result has been sent to the client the result, any state information and any other information (client identity, address, etc.) is deleted from the server (102) so that the server is stateless. In this case there is no need to derive or update and send a continuation state to the client (101).

If it is not possible to send the entire part of the result, which has not been sent before, to the client (101) in one go a continuation state is created or updated to reflect the total part of the result that is going to be sent in this session (and any previous session(s)) to the client (101), i.e. how much of the result the client (101) has received after receiving this last result. The continuation state also comprises information regarding the size of the complete result. The updated/derived continuation state is sent to the client together with the result after which all information relating to the transmission, the complete result and any additional information is deleted from the server (102).

Alternatively, the update of the continuation state may also be performed at the client (101) on the basis of the received result from the server (102) if information regarding the number of elements or the size of the result is transmitted to the client (101).

As an example, the server (102) may be a Bluetooth Service Discovery Protocol (SDP) Server. A client (101) (then being a SDP client) may then communicate according to the SDP protocol with the server (102) in order to obtain information regarding, which services are available via/on the server (102), i.e. discovering which services are available in a Bluetooth environment.

As an example the SDP client (101) would initiate a "ServiceSearchRequest" and provide one or more UUIDs (Universally unique identifiers) for services to search for in the request/query to the SDP client (102). The SDP server (102) would then process the provided UUIDs e.g. in a database (106) and return a "ServiceSearchResponse" as a result (in the form of Service Records) comprising one or more Handles of services matching the client specified UUIDs to the client (101).

Then the client (101) may perform a further request/query "ServiceAttributeRequest" comprising one or more Handles of services/Service Records to obtain Attributes for and/or a list of attribute IDs of interest in order to receive more detailed information, settings, etc. of the specific services provided by the server (102).

The server (102) would then execute a request and return a "ServiceAttributeResponse" as a result comprising a list of attribute values to the client (101) specific.

Alternatively, a combined transaction may be used where the client (101) transmits a "ServiceSearchAttributeRequest" comprising one or more UUID's of services to search for and a list of attribute ID's of interest for the client (101).

The SDP server (102) would process the received request and return a "ServiceSearchAttributeResponse" as a result comprising one or more Handles of matching service(s) and a corresponding list of attribute values.

Service Records consist typically of both universal service attributes and service specific attributes. An universal service attribute is an attribute which could apply to all types of services. Examples of a service-specific attributes could include attributes specific to a printing service (such as color, duplex and finishing capabilities, etc.), attributes specific to an audio service (such as data rate, encoding scheme, etc.), attributes specific to a dial-up networking service (such as serial port configuration, modem setup information, etc.).

Each service attribute in a service record consists of an attribute identifier (attribute ID, a 16-bit unsigned integer) and an attribute value associated with that attribute ID. Each entry of the service record is one of these (attribute, value) pairs.

When using SDP a parameter called "Continuation State", which according to Bluetooth SDP 1.0 is limited to max 16 bytes, may advantageously be used as the continuation indication/state according to the present invention. The specific implementation of the parameter "Continuation State" is as yet not determined according to the SDP standard. The content of the parameter "Continuation State" is fully up to the server (102) to define and use. Hereby, a very small continuation state is obtained. Additionally, transparency for devices according to the SDP protocol is obtained even when they are not adapted to accommodate the present invention, since the parameter "Continuation State" is part of the standard.

By using a server (102) according to the invention a stateless server is obtained giving the advantages mentioned earlier. In this way for a SDP server (102) and client (101), a number service records may be returned to the client (101) in response to a request. The number of returned records may not be the complete set generated by the request and a continuation state is updated/derived to reflect that, so that the continuation state may be used to resume the exchange of at least a part of the rest of the records when the client (101) sends the same request again while keeping the server (102) stateless while no transaction takes place with that particular client (101). The continuation state is either sent to the client (101) or derived/updated there.

In the mean time any information relating to the service record exchange may be deleted, since the continuation state may be used to resume the process.

Alternatively, the information being generated on the basis of a request may be attributes, text, etc. and the continuation would reflect how many and/or how much of an attribute has been sent. A mix of records and attributes, text, etc. may also be generated as a result.

Other service protocols are Jini(TM), Universal Plug and Play(TM), Salutation(TM), Service Location Protocol, the IrDA service discovery protocol, etc.

The use of request and responses according to the Bluetooth SDP protocol is only meant as an example. The stateless server obtained by the present invention is applicable of handling any kind of information, communications, data exchange, etc. that requires (at least some times) that a state advantageously may be used.

Figure 2a and 2b illustrates two different examples of a continuation state.

In Figure 2a a continuation state comprising two fields is shown. A first field "Total" (201) indicates the total size, number of elements/records, etc. of a result that is generated by a request received at a server from a client. A second field "Sent" (202) indicates the size of the amount, the number of elements/records, etc. of the result that has already been sent to the client.

As an example, the first field (201) could comprise the value '10' meaning that the result has ten elements/records. Alternatively, the first field (201) could comprise a hexadecimal value 'FE' indicating that the size of the result is FE (254 in decimal notation) bits (or bytes).

Additionally, the second field (202) could comprise the value '2' meaning that two elements/records (of the total ten) already has been sent. Alternatively, the second field (202) could comprise the value '7F' meaning that 7F (127 in decimal notation) bits or bytes of the result (having the total size of 'FE'/254) already have been sent during one or more transmissions.

As another alternative the second field (202) could indicate the next element to be sent instead of the last sent element as well as other variations.

Figure 2b shows another embodiment of a continuation state with two fields (201, 202) corresponding to the fields (201, 202) in Figure 2a and a third field (203).

The third field (203) preferably comprises a pointer, index, offset, etc. to the next element or the next piece of information from the result that is to be sent to the client. In this way, the next part of the result that is to be sent to the client may be retrieved and/or identified in a very easy and efficient way, since the pointer, offset, index, etc. locates the relevant information/data of the result directly thereby avoiding the need for searching the result.

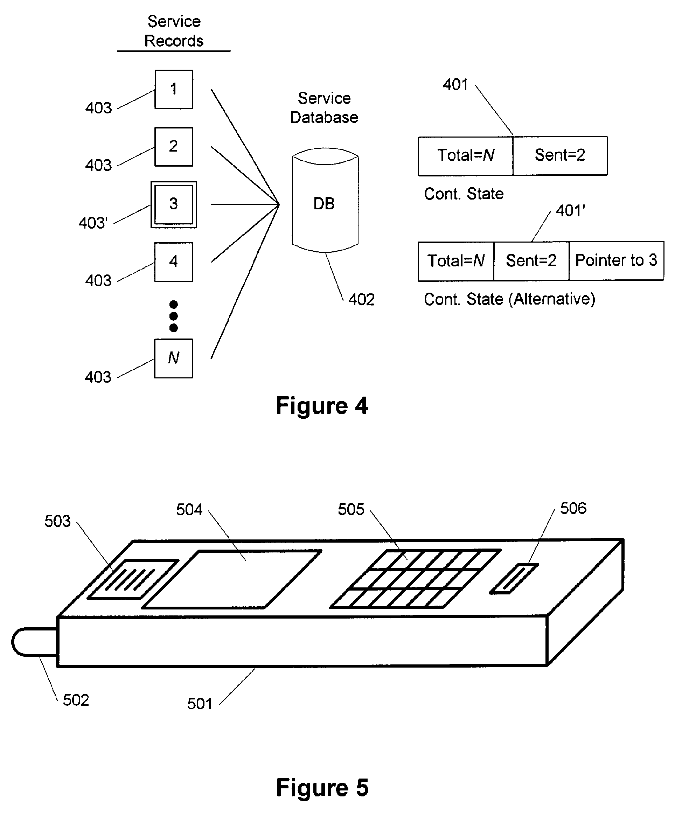

The use of the continuation state will be explained in greater detail in the following and in connection with Figure 4.

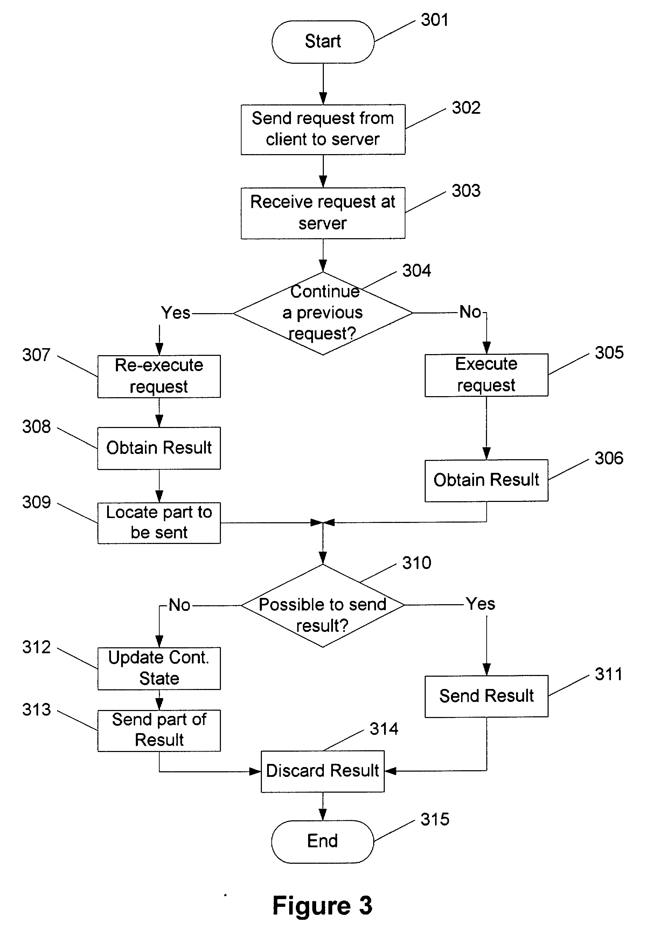

Figure 3 shows a flow chart illustrating an embodiment of the method according to the present invention. The method starts at step (301) where the method is initialised, etc. In this step (301) a communication connection/link between a client and a server is be established, etc. so the server and the client may exchange requests, information, data, etc.

At step (302) a request e.g. comprising a query is generated at the client and sent to the server. The request may e.g. be a Service request according to Bluetooth SDP protocol or any other type of request for information to be sent from a client to a server.

The request sent from the client is the complete/original/initial request, that is the request is identical to the original request regardless of whether the request has already been partially processed by the server (the request is part of an ongoing transmission) or not (the request is a new request).

At step (303) the request is received at the server.

At step (304) it is determined whether the request is part of an already established and ongoing information/data exchange/transmission, i.e. if the client has sent an identical request before where the entire result of the request was not sent to the client but only part of the result e.g. because the result was to long to be sent in one go or any other reason.

Preferably, this is done simply by checking if a continuation state is set, active, present, and/or etc. e.g. in the request received from the client.

Preferably, the continuation state also comprises relevant information for determining how far the ongoing information/data exchange/transmission process has proceeded.

More specifically, the continuation state preferably comprises information like the total number of hits, records, bits/bytes of data etc. that the initial request generates/generated and information of how much of the total information has already been sent to the client, e.g. how many records, bits, etc. out of the total number have already been sent.

Additionally, the continuation state may also comprise an index, a pointer, an offset, etc. to the next record, piece/bit of information/data to be sent. This enables the relevant next record or bit of information to be obtained in a very fast and easy manner after the server has executed the request.

Preferably, the continuation state is transmitted from the client and received at the server as part of the request at steps (302) and (303).

Alternatively, the continuation state may be transmitted separately.

In a preferred embodiment, a parameter called "Continuation State", which according to Bluetooth SDP protocol 1.0, is limited to max 16 bytes, may advantageously be used as the continuation state. The specific implementation of the parameter "Continuation State" is as yet not determined according to the SDP standard. Hereby, a very small continuation state is obtained. Additionally, transparency for devices according to the SDP protocol is obtained even when they are not adapted to accommodate the present invention, since the parameter "Continuation State" is part of the standard.

The check in step (304) may then simply be done by checking if the SDP "Continuation State" parameter indicates that the request is part of a continuation, e.g. by containing non-nil information.

Since the server is stateless it has no way of knowing whether the request from the client is part of an ongoing transmission before it receives information e.g. in the form of the continuation state, the "Continuation State", etc. from the client preferably together with the request.

Steps (307) - (309) are executed if the request from the client is part of an ongoing data/information exchange. Otherwise steps (305) and (306) are executed.

At step (305) the request from the client is handled by the server. This may e.g. involve executing a query in one or more database thereby obtaining relevant information in the form of a result for the client at step (306).

As an example, the query/request may e.g. be a service request according to the Bluetooth SDP, where a Bluetooth device (the client) request information from another Bluetooth device (the server) regarding, which services the other Bluetooth device (the server) supports/is capable of providing. The service(s) may e.g. be access to a network, access to a printer, etc.

If the request is part of an ongoing transmission, as determined by checking the continuation state, then step (307) are executed where the original/initial request is re-executed since no state is kept at the server.

At step (308) the complete result of the request is obtained, and in step (309) the part of the result which has not already been sent to the client is determined/located in the obtained result thereby resulting in a new/remaining result, which only contains information/data that has not been sent to the client as part of one or more previous requests. The part, which has already been sent, does not have to deleted physically right a way, at least not until the result is sent to the client, since it may just be ignored for now.

This is preferably done by using the information in the continuation state to determine directly, which piece of information, record, etc. is the first in the result that has not been sent to the client as a result to the initial request. The part of the result that has already been sent may be removed from or ignored in the result.

This will be explained in greater detail in connection with Figure 4.

Alternatively, the part of the result, which has already been sent to the client is ignored, skipped, deleted, removed, etc from the obtained result thereby resulting in a new/remaining result, which only contains information/data that has not been sent to the client as part of the initial request.

The steps (305) and (306) corresponds to the steps (307) and (308) and there is no difference between them with respect to function, input and output, etc., i.e. they are identical. Therefore the method may comprise only steps (305) and (306) instead of steps (307) and (308) or vice versa. In that case the test in step (304) may alternatively be executed after step (306)/step (308) and before step (309).

At step (310) a test is made whether the result (or the remaining result) is too long to be sent in one go to the client, i.e. requires multiple responses to the client, whereby information regarding a continuation state should be generated or generated and sent to the client as well as a large part as possible of the obtained result (or the remaining result).

This test may be made quite simply by checking the size of the result or the remaining result (result - skipped part) and compare it with the size of a MTU, data packet, etc.

If it is possible to send the entire result or the entire remaining result the result is sent to the client at step (311) after which the result and any other information/data relating to the communication between the client and the server is deleted, discarded, etc. from the server at step (314) in order to make the server truly state-less and the method ends at step (315).

If it is not possible to send the entire result or the entire remaining result in one transaction then step (312) updates the continuation state to reflect how large a part of the result that is going to be sent to the client.

As an example, if the result generates 10 records and only 2 can be send in one go and no records of the result have been sent before then e.g. a field in or a part of the continuation state would indicate that the total number of records in the result is 10 and another field or part would indicate that 2 has been sent (is going to be sent).

Preferably, the continuation state comprises a field where a value specifies which record were the last to be sent. If 5 of the 10 records could only be sent the value would be 5 indicating that records 1 - 5 have been sent to the client. Alternatively, the value could represent the next record to be sent instead of the last record that has been sent (value would be 6) and variations hereof.

Alternatively, values/fields in the continuation state may represent the size of the result and the size of how much information have been transmitted as described earlier and in connection with Figure 4.

As another alternative, the continuation state could also comprise a field with a pointer, an index, an offset, etc. to the next record/piece of information to be sent.

In this way, the pointer, index, offset, etc. could be used on the complete result in order to quickly access/retrieve the next record/element to be sent.

After the continuation state has been updated in step (312) to reflect how far the ongoing information exchange has proceeded, the part of the result that may be sent in one go is sent to the client at step (313) preferably together with the generated/updated continuation state. At step (314) the result and any other information/data relating to the communication between the client and the server is deleted, discarded, etc. from the server in order to make the server state-less after which the method ends at step (315).

The server may be adapted to process several request from several client simultaneously and separately.

Figure 4 illustrates the relationship of a result of a request/query and the continuation state according to the present invention. Schematically shown are a continuation state (401) and an alternative continuation state (401').

A database (402) comprising a number of records are also shown. The database (402) is preferably stored in connection with a server. When the server receives a given request/query from a client the request is executed in the database (402) resulting in a result comprising number *N* of records (403, 403') (or *N* pieces of information as described later). Each record (403, 403') may comprise one or more attributes.

The continuation state (401) is related to the given query/request and comprises a field with a value that indicates the total number *N* of hits/records that the query will generate as a result when executed in the database (402). The continuation state (401) also comprises a field where a value indicates how many of the *N* records the client has already received. In this particular example, the client has already received 2 records.

The alternative continuation state (401') is identical to the state (401) with the exception that the continuation state (401) further comprises another field. The third field preferably comprise a pointer, index, offset, etc. to the next element, record, piece of information, etc. (403') of the result to be sent to the client. In this way, the relevant next record (403') may be obtained directly when the result comprising the *N* records (403, 403') are obtained.

The continuation state (401, 401') is preferably sent to the server from the client together with or as part of the query/request.

When the complete query/request has been executed the continuation state is used to determine which part of the result is to be sent next. The second field indicates in this example that 2 elements already has been sent thereby giving that the next element to be sent is the third record (403').

After the next record(s) to been sent to the client is determined the state (401, 401') is updated to reflect how far the transaction has gone. As an example, suppose that it is possible to send two records in one go to the client. Then the first field would stay the same and the second field would be changed to indicate that four records have been sent.

The update of the continuation state (401, 401') may be performed by the server or by the client. If the update takes place at the server the updated continuation state (401, 401') is preferably sent to the client as part of or together with the records. If the update takes place at the client the client may update the state based on the received amount of records and the state prior to update, which requires that the prior state is transmitted back to the client or is kept there from the start of the request.

If the total number *N* is changed when the state is updated (unless if it is the first time) then the result set of records has changed from the beginning of the transaction and the process preferably has to start all over in order to avoid loss of data, mismatch, etc.

The first time a transaction/request is initiated the continuation state would be empty or contain NIL values.

Additionally, the state is only updated if there is still information/records that is not going to be sent to the client during the transaction.

After the record(s) have been sent any information regarding the result and transaction are deleted from the server.

Alternatively, the two fields of the continuation states (401, 401') may specify the size, e.g. in bits, bytes, etc., of the total result and how many bits, bytes, etc. that has been sent. The third field of the state (401') may than comprise a pointer, offset, index, etc. to the relevant part, e.g. in the middle of a record, in the middle of an attribute in a record, in a text string, etc. of the information to be sent next.

Instead of indicating how much have been sent it may be specified directly which element is to be sent next. However, for the state (401, 401') comprising size or when parts of a record, etc. may be transmitted it is preferred to indicate how much have been sent, while for records, where only complete records is sent, it is preferred to indicate the next element.

Figure 5 shows an embodiment of a stateless server, which may be a part of the system and/or use the method according to the present invention. Shown is a mobile telephone/a mobile communication terminal (501) acting like a server, e.g. providing Bluetooth services to other devices, where the telephone/terminal (501) has display means (504), input means (505) like a keypad, touch screen, etc., an antenna (502), a microphone (506), and a speaker (503).

Preferably, the phone/terminal (501) comprises wireless and/or ad-hoc communication means (not shown) like Bluetooth-, IR-, RF communication means, etc.

By using the phone/terminal (501) in connection with the stateless server and/or use the method according to the present invention, less memory is needed in order to store the state, etc. RAM and/or other types of volatile and non-volatile memory are usually a significant part of the cost of a mobile terminal and other small consumer devices. As examples of Bluetooth services a mobile terminal may provide comprises cordless "telephone modem" to connect e.g. a Laptop to the Internet via the phone, synchronization of calender and/or personal information, cordless games, etc.

Alternatively, the mobile terminal may function as a client according to the invention.

Other devices, systems, etc. may also function as a server according to the present invention like a computer in a network or in general any device that transmits information.

## Claims

1. A method of providing a stateless server, the method comprising the steps of
• receiving a request from a client at the server,
• obtaining a result by executing the request at the server,
**characterized in that** the method further comprises the steps of
• receiving a continuation state from the client,
• determining a first part of the result, where the first part has not been sent to the client before, on the basis on the continuation state,
• sending at least a part of the first part of the result from the server to the client, and
• removing from the server the continuation state, the result and any information relevant to the client.

2. Method according to claim 1, **characterized in that** the step of determining the first part comprises
• determining a second part of the result, where the second part has already been sent to the client, on the basis of the continuation state, and
• skipping the second part of the result resulting in the first part of the result.

3. Method according to claim 1, **characterized in that** the continuation state comprises a field indicating the start of the first part and **in that** the step of determining the first part comprises
• using the field of the continuation state thereby directly determining the first part of the result.

4. Method according to claims 1 - 3, **characterized in that** the method further comprises a step of updating the continuation state in order to indicate, which part to the result that has been sent to the client, if only a part of the first part is sent to the client.

5. Method according to claim 4, **characterized in that** the updated continuation state is sent to together with the least a part of the partial result from the server to the client.

6. Method according to claims 1 - 5, **characterized in that** the continuation state is received together with the request.

7. Method according to claims 1 - 6, **characterized in that** the parameter "continuation state" according to the Bluetooth Service Discovery Protocol (SDP) is used as the continuation state.

8. Method according to claims 1 - 7, **characterized in that** the continuation state further comprises a pointer, an index, or offset to the first part.

9. Method according to claims 1 - 8, **characterized in that** the continuation state further comprises a value representing the size of the result.

10. A method according to any one of the claims 1 - 9, **characterized in that** said method is used in connection with a mobile telephone being the server.

11. A method according to any one of the claims 1 - 10, **characterized in that** the server and the client are connected to each other via a wireless medium.

12. A computer-readable medium having stored thereon instructions for causing a processing unit to execute the method according to any one of claims 1 - 11.

13. A computer system comprising means adapted to execute a program, where the program, when executed, causes the computer system to perform the method according to claims 1 - 11.

14. A system comprising a stateless server (102), the server (102) comprising
• storage means (106) comprising information,
• communication means (103) for communicating with a client (101),
• processing means (104),
where
• the communication means (103) are adapted to receive a request and a continuation state from the client (101),
• the processing means (104) are adapted to obtain a result by executing the request at the server and to determine a first part of the result, where the first part has not been sent to the client (101) before, on the basis on the continuation state,
• the communication means (103) are further adapted to send at least a part of the first part of the result from the server (102) to the client (101), and where
• the processing means (104) are further adapted to remove from the server the continuation state, the result and any information relevant to the client.

15. A system according to claim 14, **characterized in that** the determination of the first part comprises
• determining a second part of the result, where the second part has already been sent to the client, on the basis of the continuation state, and
• skipping the second part of the result resulting in the first part of the result.

16. A system according to claim 14, **characterized in that** the continuation state comprises a field indicating the start of the first part and **in that** determination of the first part comprises
• using the field of the continuation state thereby directly determining the first part of the result.

17. A system according to claims 14 - 16, **characterized in that** the processing means (104) further are adapted to update the continuation state in order to indicate, which part to the result that has been sent to the client (101), if only a part of the first part is sent to the client (101).

18. A system according to claim 17, **characterized in that** the updated continuation state is sent via the communication means (103) to together with the least a part of the partial result from the server (102) to the client (101).

19. A system according to claims 14 - 18, **characterized in that** the continuation state is received together with the request.

20. A system according to claims 14 - 19, **characteized in that** the parameter "continuation state" according to the Bluetooth Service Discovery Protocol (SDP) is used as the continuation state.

21. A system according to any one of the claims 14 - 20, **characterized in that** the server (102) and the client (101) are connected to each other via a wireless medium.

22. A system according to claims 14 - 21, **characterized in that** the continuation state further comprises a pointer, an index, or offset to the first part.

23. A system according to claims 14 - 22, **characterized in that** the continuation state further comprises a value representing the size of the result.
